# EUROPEAN PATENT SPECIFICATION

(11) **EP 2 423 043 B1**
(45) Date of publication and mention of the grant of the patent: **05.06.2013**
(21) Application number: 11178660.4
(22) Date of filing: 24.08.2011
(51) Int. Cl.: B60N 2/64

(54) **Seat device having a function of retaining person's seated position**
Sitzvorrichtung mit einer Funktion zur Beibehaltung der Sitzposition einer Person
Dispositif de siège doté d'une fonction permettant de maintenir la position assise d'une personne

(30) Priority: 25.08.2010 JP 2010188420
(43) Date of publication of application: 29.02.2012
(73) Proprietor: DENSO CORPORATION, Kariya City Aichi 448-8661 (JP)
(72) Inventor: Inou, Hiroshi, Kariya-city, Aichi 448-8661 (JP); Sawada, Mamuro, Kariya-city, Aichi 448-8661 (JP); Totsuka, Seiji, Kariya-city, Aichi 448-8661 (JP); Nomura, Hisako, Suita-shi, Osaka 565-0872 (JP); Muraguchi, Kenichi, Itami-shi, Hyogo 664-0881 (JP); Mishima, Hiroyuki, Kodaira-shi, Tokyo 187-0002 (JP)
(74) Representative: Kuhnen & Wacker

(56) References cited:
- EP-A1- 0 107 627
- GB-A- 191 214 074
- JP-A- 7 315 089
- US-A- 3 503 649
- US-A1- 2006 232 118

## Description

### BACKGROUND OF THE INVENTION

### [Technical Field of the Invention]

The present invention relates to a seat device having a function of retaining a person's seated position, and in particular, the seat device which can be realized as seats for vehicles, for example, see US 3 503 649 A, corresponding to the preamble of independent product claim 1.

### [Related Art]

It is known that so-called chairs are widely used as seated position retention devices. Such a chair includes a seat member on which a person is seated and an upper body support member that supports the upper body back of the person. It is also known to use items for covering a chair and placed on a chair. In order to allow a person to be seated with ease, various suggestions have been made regarding the shapes of these seated position retention devices.

For example, patent document JP-A-H07-315089 discloses a pelvis support mechanism for vehicle seat. In this mechanism, a seat back (upper body support member) is divided into two members of an upper back and a lower back, and the lower back is made rotatable at a level corresponding to a lumbar support position. Thus, the angle of the lower back in this mechanism is made adjustable to a hip point of a seated person, so that the person will not get easily tired. Another type of various seated position retention devices is also known, which include a side support mechanism that supports a seated person from both sides to make the person physically immovable.

The adjustment of the angle of the lower back as disclosed in the above patent document will not help restoring a person's posture imbalanced in the horizontal direction to an original posture. Accordingly, the person's posture imbalanced in the horizontal direction tends to remain as it is. When a person's posture remains imbalanced in the horizontal direction, the person is liable to get tired. Moreover, when the person is seated on a driver's seat of a vehicle, the posture that has remained imbalanced in the horizontal direction is not favorable from the viewpoint of safe driving.

It is true that a side support mechanism is able to support a seated person's posture but the support of the posture is forceful. Therefore, depending on the conditions, the degree of freedom of the physical motion is lowered. For this reason, muscle stress is likely to be caused in the body trunk, the upper legs and the lower legs, leading to accumulation of fatigue.

### SUMMARY OF THE INVENTION

The present invention has been made in light of the conditions set forth above and has as its object to provide a seated position retention device or a seat device with which a seated person's posture imbalanced in the horizontal direction is easily restored to an original posture.

In the present invention, "retaining a person's seated position" intends to mean "assisting a person to retain their seating position."

In order to achieve the above object, the present invention provides a seat device for retaining a person's seated position, which can also be practiced as a seated position retention device (hereinafter, the expression "the seat device" conceptually includes the seated position retention device). According to a first feature of the present invention as defined in claim 1, the seat device includes a seat surface which is provided with thigh position reference ridges (or simply reference ridges). Each of the thigh position reference ridges is fitted to a recess between a seated person's biceps femoris muscle and semimembranosus muscle to allow the thigh to stably stay in position in the seat surface in the person's seated state. With a normal chair, a seated person's horizontal sway usually causes the person's thighs to move, interlocking with the sway.

However, according to the present invention, thighs are stably in position and thus horizontal motion of the thighs interlocking with the horizontal imbalance of the upper body is suppressed. Thus, using the positions of the thighs as references, the horizontally imbalanced upper body is easily restored to the original adequate posture.

Further, the adequately postured upper body will help reduce muscle fatigue of the person, and the person is unlikely to get tired. In addition, easy restoration of the upper body to the original adequate posture is useful for safe driving in which it is important to stably keep the upper body in position. Thus, the seat device of the present invention may be preferably used for a driver's seat of a vehicle.

With a normal chair, when a seated person's lower legs are moved, the thighs are also moved interlocking with the motion of the lower legs. In this regard, according to the present invention, the thighs are permitted to stably stay in position. Thus, the lower legs can be moved using the knees located at the ends of the respective thighs as fulcrums. Accordingly, when the lower legs are moved, the thighs are prevented from being moved interlocking with the motion of the lower legs, leading to easy motion of the lower legs. In this way, use of the seat device for a driver's seat of a vehicle will make it easy for the driver to operate the accelerator pedal or the brake pedal. In this regard as well, the seat device of the present invention may be particularly favorably used for a driver's seat of a vehicle.

Preferred features of the invention are disclosed in the dependent claims.

It is preferred, according to an additional feature of the present invention, that the seat device includes an upper body support surface that supports an upper body back of a seated person. When the upper body support surface is provided, it is preferred, according to an additional feature of the present invention, that the upper body support surface includes rib support slant ridges (or simply slant ridges).

Thus, ribs are supported by the rib support slant ridges to suppress horizontal sway of a seated person's upper body. Further, when the horizontal sway of the upper body is suppressed, the seated person's posture is easily retained. In addition, the suppression of the horizontal sway of the upper body also provides an advantage of easing the person's breathing. The reasons why seated person's breathing is eased will be described later.

It is preferred, according to an additional feature of the present invention, that the rib support slant ridges are provided between the ninth and the tenth ribs, being in contact with these ribs.

Although the details will be described later, provision of the rib support slant ridges contributes to giving a particularly great advantage of easing seated person's breathing.

It is preferred, according to an additional feature of the present invention, that the upper body support surface further includes shoulder blade aid ridges (or simply aid ridges).

The shoulder blade aid ridges are substantially horizontal and located within a vertical range covering the fifth to the seventh ribs. Each of the shoulder blade aid ridges has a backbone-side end portion which is located between backbones and the corresponding shoulder blade.

The shoulder blade aid ridges, being substantially horizontal, hinder the tilting motion of a seated person's upper body in the horizontal direction. With the tilting motion of the upper body being suppressed, the seated person's posture is more easily retained.

On the other hand, a rotational motion of the upper body centering the backbones will not be hindered by the shoulder blade aid ridges. Accordingly, when the seated person looks left or right, the horizontal sway of the upper body is suppressed, while the rotational motion of the upper body for turning the person's face to the left or right is accelerated. As a result, undesirable horizontal sway of the head during driving is suppressed. Thus, the seat device of the present invention may be favorably used for a driver's seat of a vehicle.

When a person is seated, the backbone-side end portion of each shoulder blade aid ridge located between the backbones and a backbone-side end of the corresponding shoulder blade is used as a fulcrum of turn, and thus the turning of the corresponding shoulder blade is aided. Thus, when the seat device is used for a driver's seat of a vehicle, the seated person can easily manipulate the steering wheel.

Shoulder blades are pulled downward by lower trapezius muscles. Meanwhile, shoulder blades are supported by the respective shoulder blade aid ridges. Therefore, the trapezius muscles are prevented from being lowered. This will also help realize easy turning of the shoulders.

In addition to the shoulder blade aid ridges, it is preferred, according to an additional feature of the present invention, that the upper body support surface is further provided with lower rib horizontal ridges (or simply horizontal ridges) which are substantially horizontal and located within a vertical range covering the tenth to the twelfth ribs.

The lower rib horizontal ridges also hinder the tilting motion of a seated person's upper body in the horizontal direction. With the tilting motion of the upper body being suppressed, the seated person's posture is more easily retained.

Further, it is preferred, according to an additional feature of the present invention, that the upper body support surface is provided with a pair of ilium support projections (or simply support projections) which are fitted to a pair of ilium projections and that the seat surface is provided with a pair of ischium accommodating projections that accommodate a pair of ischium projected portions.

Although the details will be described later, owing to the ilium support projections and the ischium accommodating recesses, a submarining phenomenon is unlikely to be caused, and thus the adequate posture of a seated person is easily retained. Since the adequate posture is easily retained, the person will recover from fatigue earlier.

Further, a seated person comes to be able to fully hold the person's feet on the floor. Thus, the seat device may be favorably used for a driver's seat on which a seated person may be required to fully step on the accelerator pedal or the brake pedal. The reasons why a person is able to fully step on the floor will also be described later.

The size of pelvis depends on individual persons. Accordingly, the positions of ischia and ilia, which are parts of pelvis, in a seated state depend on individual persons. Therefore, it will be most preferred to determine the positions of the ilium support projections and the ischium accommodating recesses on an individual person basis.

Meanwhile, the size of pelvis is not so greatly different between individual persons if the individual persons are adults. Therefore, the positions of the ilium support projections and the ischium accommodating recesses may not be required to be determined on an individual person basis. In this case, the positions of the ilium support projections and the ischium accommodating recesses may be determined by limiting attributes, such as male adult or female adult, of a seated person and considering an average pelvis of the persons having the limited attributes. More preferably, the size of the ilium support projections and the ischium accommodating recesses may be determined considering a variation range of the pelvises of the persons having the attributes.

When rib support slant ridges are provided in the upper surface support surface, it is preferred, according to an additional feature of the present invention, that an upper part of the upper body support surface at least including the rib support slant ridges and extending to the top is made vertically movable with respect to the seat surface.

A rib position relative to the seat surface comparatively greatly varies depending on individual persons. Therefore, when the upper part of the upper body support surface including the rib support slant ridges is made vertically movable, the position of the rib support slant ridges may be brought to the position matching the rib position which varies depending on individual persons.

When shoulder blade aid ridges are provided in the upper surface support surface, it is preferred, according to an additional feature of the present invention, that an upper part of the upper body support surface at least including the shoulder blade aid ridges and extending to the top is made vertically movable with respect to the seat surface.

Thus, the shoulder blade aid ridges are vertically moved for adjustment to a shoulder blade position which varies depending on individual persons.

When the upper body support surface is provided with the shoulder blade aid ridges and the lower rib horizontal ridges, it is preferred, according to an additional feature of the present invention, that an upper part of the upper body support surface including the shoulder blade aid ridges and the lower rib horizontal ridges and extending to the top is made vertically movable with respect to the seat surface.

Thus, the shoulder blade aid ridges and the lower rib horizontal ridges are vertically moved for adjustment to a shoulder blade position and a lower rib position, which vary depending on individual persons.

According to an additional feature of the present invention, slant ridges are provided. The slant ridges are essentially the same as the rib support slant ridges and thus the same advantage as that related to this latter feature is obtained.

According to an additional feature of the present invention, substantially horizontal ridges are provided. These ridges can function as the shoulder blade aid ridges and thus the same advantage as that related to this latter feature is obtained.

According to an additional feature of the present invention, slant ridges and a pair of substantially horizontal ridges sandwiching the slant ridges are provided. These slant ridges and horizontal ridges are essentially the same as the rib support slant ridges, the shoulder blade aid ridges and the lower rib support ridges. According to this last mentioned additional feature, these ridges are adjusted to a ninth-rib position, a shoulder blade position and a lower rib position, which vary depending on individual persons.

According to an additional feature of the present invention, the upper body support surface is further provided with a pair of ilium support projections. The part of the upper body support surface including the pair of ilium support projections is undetachably connected to the seat surface.

An ilium position relative to the seat surface is not so different between individual persons. Therefore, if the part of the upper body support surface including the ilium support projections is also moved in the vertical direction together with the upper part including the shoulder blade aid ridges and the lower rib horizontal ridges, the ilium support projections may not be fitted to the respective ilium projections. In this regard, according to the last mentioned additional feature of the present invention, the part of the upper body support surface including the ilium support projections is undetachably connected to the seat surface. Thus, when the part including the ridges is vertically moved, the part including the ilium support projections will stay unmoved in the vertical direction. Accordingly, while the position of the ridges is adjusted, the state where the ilium support projections are fitted to the respective ilium projections is retained.

### BRIEF DESCRIPTION OF THE DRAWINGS

In the accompanying drawings:
Fig. 1 is a perspective view illustrating a seat according to an embodiment of a seat device of the present invention;
Fig. 2 is a schematic front view illustrating a pelvis of an adult male;
Fig. 3 is a vertical cross sectional view illustrating the seat taken along a plane passing through a pair of ischium accommodating recesses (i.e. taken along a line III-III of Fig. 1);
Fig. 4 is a side view illustrating the pelvis of an adult male;
Fig. 5 is a schematic top view illustrating the pelvis of an adult male;
Fig. 6 is a cross-sectional view illustrating the seat taken along a plane passing through the centers of a left ilium support projection, a left ischium accommodating recess and a left thigh position reference ridge (i.e. taken along a line VI-VI of Fig. 1);
Fig. 7 is a cross-sectional view taken along a plane passing through a pair of ischium accommodating recesses (i.e. taken along a line VII-VII of Fig. 1);
Fig. 8 is a schematic structural view illustrating ribs, shoulder blades and backbones; and
Fig. 9 is an illustration conceptually explaining an inseparable portion and a separable and movable structure of a seat according to a modification of the present embodiment and a cover on the seat where the present invention can also be applied on the cover.

### DETAILED DESCRIPTION OF THE PREFERRED EMBODIMENTS

With reference to the accompanying drawings, hereinafter will be described an embodiment of a seat device for retaining person's seated position (conceptually includes the seated position retention device) according to the present invention.

In the embodiment, "retaining a person's seated position" intends to mean "assisting a person to retain their seating position."

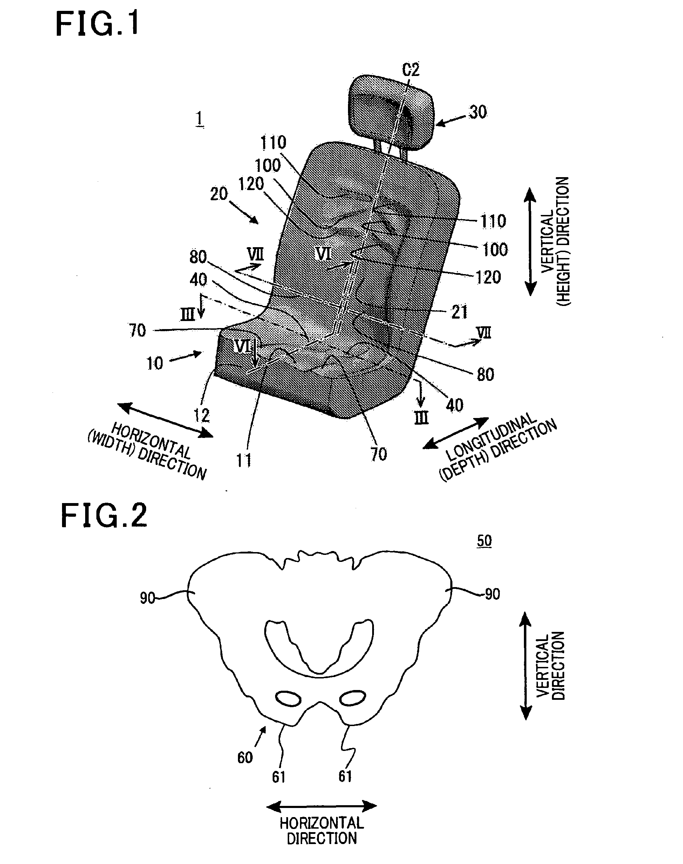

Fig. 1 is a perspective view illustrating a seat 1 according to an embodiment of the seat device with the seated position retention function. The seat 1 is used as a driver's seat of a vehicle.

The seat 1 includes a seat member 10, an upper body support member (or backrest) 20 and a headrest 30. The seat member 10, the upper body support member 20 and the headrest 30 have surfaces made of the same material, i.e. these members are covered with the same soft material, such as fabric or leather. The seat member 10 serves as a member to be seated by a person. The upper body support member 20 serves as a member for supporting the upper body, such as the lumbar back or upper body back, of the person. The headrest 30 serves as a member for supporting the back of the head of the person.

In the present embodiment, horizontal, longitudinal and vertical directions can be set to the seat 1 as illustrated in Fig. 1. The horizontal direction is a width direction along which the seat 1 extends laterally in its front view or its rear view, the longitudinal direction is a depth direction along which the seat 1 extends in one of its side views, and the vertical direction is a height direction along which the seat 1 extends from a vehicle floor, for example.

The seat member 10 has an upper surface, i.e. a seat surface 11, in which a pair of ischium accommodating recesses 40 and a pair of thigh position reference ridges 70 are formed. Fig. 2 is a schematic front view illustrating a pelvis 50 of an adult male. As shown in Fig. 2, two ischia 60 in the pelvis have respective two ischium projected portions 61. When a person is seated on the seat surface 11, the ischium accommodating recesses 40 accommodate the respective ischium projected portions 61 via the skin and the flesh.

The position of the ischium accommodating recesses 40 in the seat surface 11 is determined such that the ischium accommodating recesses 40 are ensured to be opposed to the respective ischium projected portions 61, when a person is seated on the seat surface 11. Thus, the pelvis and the back of the person will be supported by the upper body support member 20. The position of the ischium accommodating recesses 40 in the seat surface 11 is determined based on the size of the pelvis 50 of average adults.

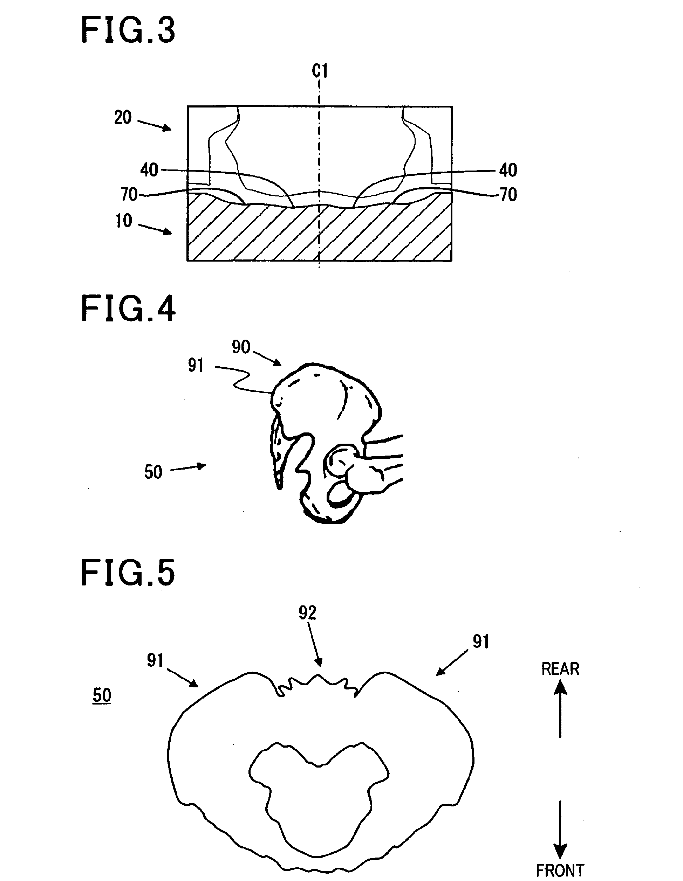

Fig. 3 is a vertical cross-sectional view illustrating the seat member 10, taken along a plane passing between the pair of ischium accommodating recesses 40 (i.e. taken along line III-III of Fig. 1). As shown in Fig. 3, the ischium accommodating recesses 40 each have a shape of a bowl. Specifically, each ischium accommodating recess 40 has a center at the deepest position thereof toward which the recess 40 is slanted to an extent of a shallow bowl.

As shown in Fig. 3, the ischium accommodating recesses 40 are provided so as to be symmetric with reference to a widthwise center plane C1 of the seat member 10. The two ischium accommodating recesses 40 have a spacing therebetween and a widthwise length, which are determined based on the spacing and the size of the two ischium projected portions 61 of average adults. Also, the degree of slant and the depth as well as a longitudinal length (perpendicular to the widthwise direction), not shown, of each of the ischium accommodating recesses 40 are also determined based on the size of the pair of ischium projected portions 61 of average adults.

The spacing and the size of the two ischium projected portions 61 of average adults here may be obtained taking into account both or either of adult males and adult females. Whether the adults taken into account should include both of males and females or either of males and females may be determined based on the usage of the seat 1. The average adults that should be taken into account are determined in the same manner as the above, in determining the position of the ischium accommodating recesses 40 in the seat surface 11. Also, depending on the usage, the position of the ischium accommodating recesses 40 may be determined based on the spacing and the size of a pair of ischium projected portions of children. Further, the position of the ischium accommodating recesses 40 may be determined based on the spacing and the size of a pair of ischium projected portions of an individual person.

Referring again to Fig. 1, the configuration of the seat surface 11 is further described. In the seat surface 11, the pair of thigh position reference ridges 70 are formed. Also, the seat surface 11 has sides located in the widthwise direction, both of which are slightly uplifted.

Each thigh has, on its back, a biceps femoris muscle and a semimembranosus muscle. There is a recess between these biceps femoris muscle and semimembranosus muscle. In other words, there is a portion between these biceps femoris muscle and semimembranosus muscle, which portion more easily sinks when pushed from immediately above these muscles than when pushed from outside. This recess resides in approximately the center in the widthwise direction of the back of a thigh. Since both of the biceps femoris muscle and the semimembranosus muscle extend in the longitudinal direction of the thigh, the recess therebetween also extends in the longitudinal direction.

The pair of the thigh position reference ridges 70 are each provided so as to be fitted to the recess between the biceps femoris muscle and the semimembranosus muscle. For this reason, specifically, the pair of thigh position reference ridges 70 are extended from near the position where the pair of ischium accommodating recesses 40 are formed toward a knee-side end portion 12 of the seat member 10. In this case, the two thigh position reference ridges 70 are made parallel to each other, or, alternatively, may be slightly distanced from each other as the ridges 70 near the knee-side end portion 12.

Further, the height, the longitudinal length and the widthwise length of each of the two thigh position reference ridges 70 as well as the spacing therebetween are determined such that each of the ridges 70 is easily fitted to the recess between the biceps femoris muscle and the semimembranosus muscle when a person is seated on the seat surface 11. The thigh position reference ridges 70 are each formed by placing a material beneath the material configuring the surface of the seat 1. The material placed beneath the material configuring the surface of the seat 1 has a rigidity that can maintain the shape of each of the thigh position reference ridges 70 when thighs are located on the respective ridges 70.

Hereinafter, the configuration of the upper body support member 20 is described. As shown in Fig. 1, the upper body support member 20 has an upper body support surface 21 in which a pair of ilium support projections 80 are formed at a lower portion thereof. The two ilium support projections 80 are formed at the same level from the seat surface 11 and have the same size and the same degree of projection.

Fig. 4 is a side view illustrating the pelvis 50, which is taken along a VI-VI line in Fig. 1. As shown in Fig. 4, ilia 90 configuring the upper portion of the pelvis 50 have respective projections 91 which are projected rearward (hereinafter referred to as "ilium projections 91"). Fig. 5 is a schematic top view illustrating the pelvis 50 of a male adult. As shown in Fig. 5, the ilium projections 91 are located on both sides of backbones 92, or located sandwiching the backbones 92. In each ilium projection 91 having a projected shape, the vertical length is small but, compared to this, the horizontal length is large. The ilium support projections 80 provided in the upper body support member 20 are configured to be fitted to the respective ilium projections 91 via the skin and the flesh of a seated person. The position of the ilium support projections 80 is determined based on the size of the pelvis of average adults. The average adults to be taken into account are determined in the same manner as mentioned above.

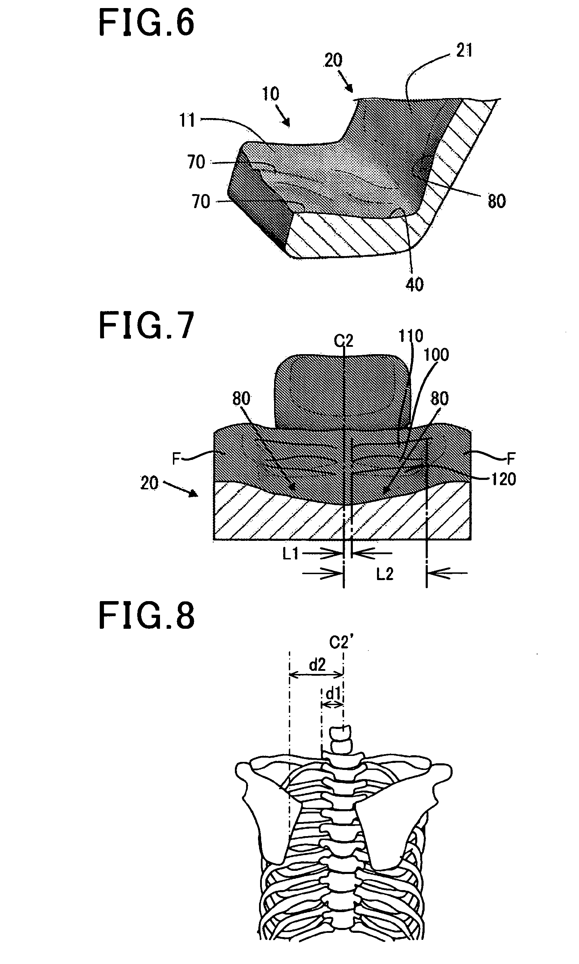

Fig. 6 is a cross-sectional view of the seat 1 taken along a plane passing through the centers of the left ilium support projection 80, the left ischium accommodating recess 40 and the left thigh position reference ridge 70 (i.e. taken along a line VI-VI of Fig. 1). Fig. 7 is a cross sectional view taken along a plane passing through the pair of ilium support projections 80 (i.e. taken along a line VII-VII of Fig. 1). As will be understood from Figs. 6 and 7, the shape of each ilium support projection 80 is not a projection slanted upward, downward and leftward and rightward centering on the peak point. Instead, the ilium support projection 80 has the most projected portion which is approximately linearly shaped, matching the shape of the corresponding ilium projection 91. Also, as will be understood from Fig. 7, each ilium support projection 80 is linearly slanted toward the widthwise center of the upper body support surface 21. In other words, the degree of projection of each ilium support projection 80 becomes smaller toward the widthwise center of the upper support surface 21. Such a slant of each ilium support projection 80 also helps the projection 80 more suitably fitted to each of the corresponding ilium projections 91.

The position of the two ilium support projections 80 relative to the seat surface 11 and the spacing between the two ilium support projections 80 are determined based on the spacing and the size of the pair of ilium projections 91 of average adults. The size of each ilium support projection 80 is determined ensuring to support the corresponding ilium projection 91 but ensuring not to support other portions of the upper body as much as possible. It should be appreciated that the average adults that should be taken into account in determining the position and the spacing of the ilium support projections 80 are determined in the same manner as in the case of the ischium accommodating recesses 40.

The ilium support projections 80 are each formed by placing a material beneath the material configuring the surface of the seat 1. The material placed beneath the material configuring the surface of the seat 1 has a rigidity that can maintain the shape of each of the ilium support projections 80 when the respective ilium projections 91 are supported by the ilium support projections 80. When the brake pedal or the accelerator pedal is fully stepped on, the depression force is large and thus the reaction force is also large. As a result, a large force may be imposed on the ilium support projections 80. For this reason, it is preferred that the ilium support projections 80 have a rigidity which is able to maintain the shape of themselves when such a large reaction force is imposed.

The upper body support surface 21 of the upper body support member 20 is further provided with a pair of rib support slant ridges 100 and a pair of shoulder blade aid ridges 110 and a pair of lower rib horizontal ridges 120.

The rib support slant ridges 100 are ensured to fit to ribs from beneath when the ribs descend with exhalation. The "ribs that descend with exhalation" mainly refer, here, to the ninth to the twelfth ribs to which respective inferior posterior serratus muscles are connected. Accordingly, the rib support slant ridges 100 are each located at a position that allows the ridge 100 to fit to any one of the ninth to twelfth ribs from beneath. For example, the rib support slant ridges 100, when being fitted to the respective ninth ribs from beneath, are each positioned between the ninth and the tenth ribs, being in contact with them.

The ninth to the twelfth ribs are connected to the ribs located at higher positions through body tissues, and thus the ribs located higher than the ninth ribs also descend with exhalation. Accordingly, for example, the rib support slant ridges 100 may be positioned between the eighth and the ninth ribs, being in contact with them.

As shown in Fig. 1, the two rib support slant ridges 100 of the present embodiment are spaced apart from each other. The length of the spacing is made larger than the thickness of the backbones so that the backbones are prevented from being pressed by the rib support slant ridges 100. Also, each one of the rib support slant ridges 100 is slanted downward from an end portion thereof near the other one of the rib support slant ridges 100 (backbone-side end portion) toward the other end portion thereof (outer end portion). The angle of this slant is ensured to substantially coincide with the inclination angle of the ribs against which the rib support slant ridges 100 are fitted.

The rib support slant ridges 100 each have the length, thickness and rigidity as described below. Specifically, the length may preferably be set to an average length of the ribs (e.g., the ninth ribs) to be fitted to. However, the length larger or smaller than this may also allow the rib support slant ridges 100 to exert the effects thereof. The thickness is ensured to be smaller than the distance between the pair of ribs to be fitted to and the pair of ribs located immediately beneath the pair of ribs to be fitted to, but to be large enough to support the pair of ribs to be fitted to. For example, the thickness may be approximately the same as the thickness of the pair of ribs to be fitted to. The rigidity is set to a level that will not allow a seated person to be hurt when the person leans back to the upper body support member 20, but will allow the rib support slant ridges 100 to adequately support the ribs.

In a person's seated state, the position of the person's ribs relative to the seat surface 11 may comparatively greatly differ, depending on the persons seated. For this reason, the position of the person's ribs relative to the seat surface 11 is determined based on an average body size. Nevertheless, depending on the persons seated, the position of the rib support slant ridges 100 may not match the position of the person's ninth ribs to be fitted to from beneath.

However, as mentioned above, the rib support slant ridges 100 do not have to be necessarily fitted to the ninth ribs but may be fitted to the tenth or the eleventh ribs, or alternatively, may be fitted to the eighth ribs. In addition, the inclination angles of these ribs do no greatly differ from each other. Accordingly, although the position of the rib support slant ridges 100 relative to the seat surface 11 is fixed in the present embodiment, a person of any seating height may be seated on the seat 1 to have the rib support slant ridges 100 fitted to the person's descending ribs from beneath in exhalation.

The pair of shoulder blade aid ridges 110 are positioned within a vertical range covering the fifth to the seventh ribs of a seated person. Accordingly, as shown in Fig. 1, the shoulder blade aid ridges 110 are located above the rib support slant ridges 100. The two shoulder blade aid ridges 110, each being substantially horizontal, are juxtaposed in the horizontal direction. The "substantially horizontal" here refers to that these ridges 110 are slanted to an extent of the inclination angles of the fifth to the seventh ribs in the state where the backbones of the seated person are upright.

Referring to Fig. 8, the shoulder blade aid ridges 110 are specifically described. Fig. 8 is a schematic structural view illustrating ribs, shoulder blades and backbones.

Each of the shoulder blade aid ridges 110 has a backbone-side end portion which is ensured to be positioned between a backbone-side end of the corresponding shoulder blade and the backbones. The length from a widthwise center line C2 (see Fig. 1) of the upper body support surface 21 to the backbone-side end portion of each shoulder blade aid ridge 110 is figured out as follows. Specifically, this length is equal to or larger than a horizontal length d1 from a backbone center line C2' to a backbone end, which corresponds to half the thickness of each backbone (see Fig. 8), but equal to or smaller than a horizontal length d2 from the backbone center line C2' to an outer end of a part of the corresponding shoulder blade, which falls within the range of from the fifth to the seventh ribs (see Fig. 8).

However, since shoulder blades are capable of various motions, the length d2 changes with the motion of each of the shoulder blades. Therefore, the length d2 that should be taken into account is rendered to be the minimum length d2 in the turning motion of the shoulder blades.

As mentioned above, in a person's seated state, the rib position of the person relative to the seat surface 11 may comparatively greatly differ, depending on the persons seated. For this reason, the rib position of the person relative to the seat surface 11 is determined based on an average body size. Also, the longitudinal length of each of the shoulder blade aid ridges 110 is not particularly limited if only the shoulder blade aid ridges 110 can be formed in the upper body support surface 21. For example, each of the shoulder blade aid ridges 110 may have a longitudinal length corresponding to approximately half the widthwise length of the back of a person of an average size.

The vertical position of the pair of lower rib horizontal ridges 120 is determined taking into account a seating height of average persons. Specifically, the lower rib horizontal ridges 120 are formed within a vertical range covering the tenth to the twelfth ribs which are located at the lowest in all of the ribs. Accordingly, as shown in Fig. 1, the lower rib horizontal ridges 120 are positioned below the rib support slant ridges 100 and above the ilium support projections 80.

The two lower rib horizontal ridges 120, each being substantially horizontal, are juxtaposed in the horizontal direction. The "substantially horizontal" here refers to that these ridges 120 are slanted to an extent of the inclination angles of the tenth to the twelfth ribs in the state where the backbones of the seated person are upright. The horizontal position and the length of the pair of lower rib horizontal ridges 120 are not particularly limited. However, it is preferable that the lower rib horizontal ridges 120 are provided so as not to be in contact with the backbones. To this end, the lower rib horizontal ridges 120 of the present embodiment each have a backbone-side end portion which is ensured to be distanced from the widthwise center line C2 of the upper body support surface 21 by the length d1 (see Fig. 8) or more.

In the present embodiment, each of the rib support slant ridges 100, each of the shoulder blade aid ridges 110 and each of the lower rib horizontal ridges 120 have respective lengths and positions, which are determined so that these ridges, 100, 110 and 120 each have the same lengths L1 and L2 from the widthwise center line C2 to the backbone-side end portion and to the outer end portion, as shown in Fig. 7.

In the upper body support surface 21 of the present embodiment, the portions F out of the outer end portions of the ridges 100, 110 and 120 are curved so as to be projected forward, as shown in Fig. 7. Thus, the upper body of a seated person is unlikely to be imbalanced in the horizontal direction.

Hereinafter will be described the advantages obtained from the seat 1 configured as described above with a person being seated. First, an advantage of facilitating retention of a seated person's posture is described.

The structure most related to this advantage is the pair of ilium support projections 80 and the pair of ischium accommodating recesses 40. The pair of ilium support projections 80 formed in the seat 1 support the pair of ilium projections 91 of a seated person. In other words, it is ensured that a force is applied to the pair of ilium projections 91 of a seated person from the pair of ilium support projections 80. Since the ilium projections 91 are located in an upper part of the pelvis, the application of a force to the ilium projections 91 means that the force is applied to the pelvis such that the person is allowed to lean forward. Thus, a submarining phenomenon in which a seated person's pelvis leans rearward is unlikely to be caused.

In a state where a seated person's pelvis does not lean rearward, the person's pair of ischium projected portions 61 are accommodated in the pair of ischium accommodating recesses 40 formed in the seat surface 11. Also, in a state where a seated person's pelvis does not lean rearward, the upper body is approximately upright, allowing the upper body to push the ischia with a large force. Therefore, a state where the ischia are accommodated in the respective ischium accommodating recesses 40 can be easily retained. For these reasons, a submarining phenomenon is unlikely to be caused and the seated person's upright posture is easily retained. In addition, since the seated person's upright posture is easily retained, the person will recover from fatigue quickly.

Further, when a seated person holds the person's feet on the floor as well, the reaction force transferring from the soles to the trunk is received by the ilium support projections 80 of the seat 1 via the person's ilium projections 91. The ilium support projections 80 are projected out of the area where they are provided. Accordingly, the reaction force mentioned above is mainly received by the ilium support projections 80, reducing the rate that the reaction force is received by portions other than the ilium support projections 80.

Specifically, the rate of reaction force received by the upper body support surface 21 via backbones and lumbar becomes small. Thus, the load that will be imposed on the backbones and lumbar is mitigated. Also, human's ilium projections 91 do not feel so much pain when a large force is applied from outside. For these reasons, compared to normal chairs that allow an upper body to be mainly supported by backbones and lumbar, the load imposed on a seated person's body is reduced even when the person fully holds the person's feet on the floor. Thus, a seated person also can fully step on an accelerator pedal or a brake pedal.

Thus, with the seat 1 of the present embodiment, a seated person's posture is easily retained by the ischium accommodating recesses 40 and the ilium support projections 80. In addition to this, with the seat 1 of the present embodiment, the horizontal motion of the person's upper body is suppressed by the rib support slant ridges 100, the shoulder blade aid ridges 110 and the lower rib horizontal ridges 120 provided in the upper body support surface 21. Thus, these ridges 110, 110 and 120 also contribute to easy retention of the posture of the seated person. Further, the thigh position reference ridges 70 provided in the seat surface 11 determine the positions of the thighs. This will also help easily retaining the posture of the seated person.

Hereinafter is described an advantage of easing seated person's breathing. The structure most related to this advantage is the rib support slant ridges 100.

There are various body tissues between ribs, which establish connection between ribs. Accordingly, if the rib support slant ridges 100 are not provided, muscles (e.g. inferior posterior serratus muscle) that contract in exhalation not only allow the ribs, to which the muscles are connected, to descend, but also allow upper ribs, to which the muscles are not connected, to descend.

In this regard, the seat 1 of the present embodiment is provided with the rib support slant ridges 100. These rib support slant ridges 100 are fitted to seated person's ribs from beneath, which descend in exhalation. Thus, upper ribs located around the chest are suppressed from descending, so that the chest is likely to be kept open. Accordingly, the seated person can breathe with ease.

In particular, the rib support slant ridges 100, when positioned between the ninth and the tenth ribs, will exert a large effect of easing the seated person's breathing. The reason for this is as follows. Specifically, the tenth and lower ribs are included in an abdominal muscle system to which the abdominal muscles are connected, and thus descend with the contraction of the abdominal muscles.

On the other hand, the ninth and upper ribs are not connected to the abdominal muscles but to inspiratory muscles. Therefore, when the rib support slant ridges 100 are positioned between the ninth and the tenth ribs, these ribs are efficiently suppressed from being lowered by the muscles in the abdominal muscle system, while the motion of the inspiratory muscles is not hindered. In this way, the advantage of easing the person's breathing is enhanced.

As described above, owing to the configuration such as of the ilium support projections 80 and the pair of ischium accommodating recesses 40, a seated person's posture is easily retained. In the posture retained such as by the ilium support projections 80 and the pair of ischium accommodating recesses 40, the person will receive less pressure on the chest. Accordingly, the configuration such as of the ilium support projections 80 and the pair of ischium accommodating recesses 40 also enhances the advantage of easing the person's breathing.

Hereinafter is described an advantage that a seated person's posture is easily restored to the original posture. The structure most related to this advantage is the thigh position reference ridges 70.

The thigh position reference ridges 70 are each provided so as to fit into a recess between the seated person's biceps femoris muscle and the semimembranosus muscle. When each thigh position reference ridge 70 is fitted to the recess between the biceps femoris muscle and the semimembranosus muscle, the position of the corresponding thigh is determined. With a normal chair, horizontal sway of a seated person's upper body usually allows the thighs to also move interlocking with the horizontal sway. However, in the present embodiment, the thigh position reference ridges 70 determine the positions of the respective thighs and the thighs stably stay at the positions.

Accordingly, when the upper body is imbalanced in the horizontal direction as well, the thighs are suppressed from moving in the horizontal direction interlocking with the horizontal imbalance of the upper body. Thus, the positions of the respective thighs serve as references. Accordingly, when the upper body is horizontally imbalanced, the upper body can be easily restored to the adequate original posture with reference to the stably positioned thighs. The adequately postured upper body will help reduce muscle fatigue of the seated person, and the person is unlikely to get tired. In addition, in order to drive a car safely, it is important to stably keep the upper body in position, and thus the seat 1 of the present embodiment is useful for safe driving.

Hereinafter is described an advantage that lower legs are allowed to be easily moved. The structure most related to this advantage is again the thigh position reference ridges 70.

With a normal chair, when lower legs are moved, the thighs are also moved interlocking with the motion of the lower legs. However, in the present embodiment, the thigh position reference ridges 70 determine the positions of the respective thighs and the thighs will stably stay in position.

Thus, when the lower legs are moved, the knees at the ends of the respective thighs serve as fulcrums. Specifically, when the lower legs are moved, the thighs are suppressed from moving interlocking with the motion of the lower legs, while only the lower legs are allowed to move. Thus, the lower legs are easily moved. Accordingly, the accelerator pedal or the brake pedal is easily operated. With the easy operation of the pedals, fatigue caused during driving is mitigated. It should be appreciated that the advantage of easily retaining a seated person's posture will also help mitigating fatigue caused during driving.

Hereinafter is described an advantage that horizontal imbalance of a seated person's posture is suppressed. The structures most related to this advantage are the shoulder blade aid ridges 110 and the lower rib horizontal ridges 120.

The shoulder blade aid ridges 110, being substantially horizontal, substantially hinder the tilting motion of a seated person's upper body in the horizontal direction. As a result, horizontal imbalance of the upper body is suppressed.

On the other hand, a rotational motion of the upper body centering the backbones will not be hindered by the shoulder blade aid ridges 110. Accordingly, when the seated person looks left or right, the horizontal sway of the upper body is suppressed, while the rotational motion of the upper body for turning the person's face to the left or right is accelerated. As a result, undesirable horizontal sway of the head during driving is suppressed.

The lower rib horizontal ridges 120 are substantially horizontal within a range covering the tenth to the twelfth ribs which are connected to the abdominal muscles. Thus, the motion of a seated person's abdominal muscles, which is guided by the lower rib horizontal ridges 120, becomes easier. This motion corresponds to the rotation of the lumbar. The rotation of the lumbar in other words is the rotational motion of the upper body centering the backbones. Therefore, resultantly, the horizontal sway of the upper body is also suppressed by the lower rib horizontal ridges 120. In order that the above advantage is obtained by the lower rib horizontal ridges 120, it is most favorable that the lower rib horizontal ridges 120 are brought into contact with the lower ends of the pair of tenth ribs.

Hereinafter is described an advantage that seated person's shoulders are rotated with ease. The structure most related to this advantage is again the shoulder blade aid ridges 110. When a person is seated on the seat 1, a backbone-side end portion of each of the shoulder blade aid ridges 110 is positioned between the backbones and a backbone-side end portion of the corresponding shoulder blade. Therefore, the backbone-side end portion of the shoulder blade aid ridge 110 is used as a fulcrum of turn, and thus the turning of the corresponding shoulder blade is aided. Thus, the motion of the shoulders accompanying turning of the shoulder blades becomes easier. In this way, when the person is seated on a driver's seat, handling of the steering wheel becomes easier.

Shoulder blades are pulled downward by lower trapezius muscles. Meanwhile, shoulder blades are supported by the respective shoulder blade aid ridges 110. Therefore, the shoulder blades are suppressed from being lowered. This will also help realizing easy turning of the shoulders.

The present invention is not limited to the embodiment described so far. Further, the present invention may also be modified and implemented in various other ways if falling within the scope of the invention as defined by the claims.

For example, although only a pair of rib support slant ridges 100 have been provided in the above embodiment, two or more pairs may be provided. For example, a first pair of rib support slant ridges may be provided between the ninth and the tenth ribs being in contact with them, and a second pair of rib support slant ridges may be provided between the tenth and the eleventh ribs being in contact with them. Thus, the ribs are further prevented from being lowered, whereby a seated person's breathing is more eased.

In the embodiment described above, the rib support slant ridges 100, the shoulder blade aid ridges 110 and the lower rib horizontal ridges 120 have been fixed to the upper support surface 21 (i.e, the seat member 10 in the embodiment), or in other words, the positions of these ridges have been unchangeable in the vertical direction. However, positions of the objects to be supported, , i.e. a rib position and a shoulder blade position, relative to the seat surface 11 are different comparatively greatly depending on the persons seated. On the other hand, position of the ilium projections 91 relative to the seat surface 11 is comparatively less different between persons seated. The ilium projections 91 are supported by the respective ilium support projections 80 which are also formed in the upper body support surface 21.

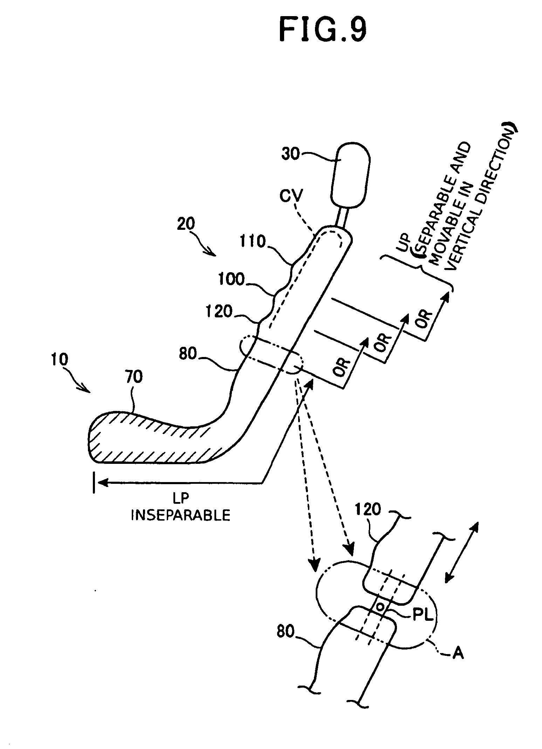

Considering this, the seat 1 may be configured as follows. Specifically, as pictorially shown in Fig. 9, the upper body support member 20 may be separated into a part that includes the ilium support ridges 80 (hereinafter referred to as " lower upper-body support LP") and a part that includes at least one of the rib support slant ridges 100, the shoulder blade aid ridges 110 and the lower rib horizontal ridges 120 (hereinafter referred to as "upper upper-body support UP"). The lower upper-body support LP may be undetachably connected to the seat surface 11 (i.e., the seat member 10 in the embodiment) and the upper upper-body support UP may be made vertically movable with respect to the seat surface 11. In this case, the upper upper-body support UP is ensured to have a movable range including a variation range of the positions of the object ribs for the ridges 100, 110 and 120, relative to the seat surface 11, which may vary depending on persons seated.

A specific configuration is given here for the vertical movement of the upper upper-body support UP relative to the seat surface 11. For example, as conceptually shown in an enlarged part A of Fig. 9, a plurality of metal poles PL may be used for connecting the upper upper-body support UP and the lower upper-body support LP, in a similar manner to the connection between the upper body support 20 and the headrest 30.

In the upper body support surface 21, the part included in the upper upper-body support UP corresponds to the "upper part of the upper body support surface", while the part included in the lower upper-body support LP corresponds to the "lower part of the upper body support surface".

The above embodiment has been described taking as an example the seat 1. However, the present embodiment may be applied to chairs having legs. Such chairs having legs are usually used in a house and a variety of such chairs are available, with the materials of the seat surfaces and upper body support surfaces being wood, vinyl and the like. When the present invention is applied to such chairs as well, there is no particular limitation in the materials of the seat surfaces and the upper body support surfaces, and thus various materials similar to those of the chairs of conventional art may be used.

The present invention may be applied to covers CV for chairs and seats (refer to Fig. 9). The covers CV correspond to the seated position retention device to which the present invention can also be applied. When the present invention is applied to the covers CV as well, the upper upper-body support UP and the lower upper-body support LP may be separately provided. In this case, the lower upper-body support LP may be undetachably connected to the seat member and the upper upper-body support UP may be made vertically movable with respect to the seat member.

When the present invention is applied to the covers CV, a cover for the upper body support surface may not be provided but only a cover for the seat surface may be provided. Alternatively, a cover for the seat surface may not be provided but only a cover for the upper body support surface may be provided.

Though already stated in the foregoing, the three-dimensional sizes and positions (including slant angles) of the thigh position reference ridges 70, the ilium support projections 80, the lower rib horizontal ridges 120, the support slant ridges 100 and the shoulder blade aid ridges 110 can be provided as order-made products or ready-made products on the seat device or the cover. In the order-made product, the body sizes of each person who use the product are reflected in the sizes and positions of those ridges. In contrast, in the read-made products, the statistically acquired standard body sizes or statistically acquired, but categorized into a plurality of typical sizes (large, medium or small, for example) of persons are reflected in the sizes and positions of the ridges. In this respect, the sizes and positions of the ridges can be determined uniquely as a matter of fact.

## Claims

1. A seat device for retaining a person's seated position, comprising a seat member (10) having a seat surface (11) on which a person is seated, whereby the seat surface (11) is provided with ridges,
**characterized in that**
the seat surface (11) has a pair of thigh position reference ridges (70) each of which is fit to a recess between a biceps femoris muscle and a semimembranosus muscle of each thigh of the person.

2. The seat device of claim 1, further comprising an upper body support member (20) having an upper body support surface (21) which supports the back of the person.

3. The seat device of claim 2, wherein the upper body support surface (21) has a pair of rib support slant ridges (100) being slanted like a shape of the ribs of the person for supporting the ribs from beneath as descending with the person's exhalation.

4. The seat device of claim 3, wherein the pair of rib support slant ridges (100) are formed to touch a person's back between a ninth rib and a tenth rib of the ribs.

5. The seat device of any one of claims 2 to 4, wherein the upper body support surface (21) has a pair of shoulder blade aid ridges (110) which is i) located so as to fit to a range of fifth to seventh ribs in a vertical direction of the seat member (10), ii) substantially horizontal to the seat surface (11), and iii) located such that a length from a center line of the upper body support surface (21) in a width direction thereof to a center-line-side end of each the aid ridges (110) is equal to or larger than a length from a backbone center line to a backbone end of the person and equal to or smaller than a length from the backbone center line to a shoulder blade of the person.

6. The seat device of claim 5, wherein the upper body support surface (21) has a pair of lower rib horizontal ridges (120) which is i) located so as to be fit to a range of tenth to twelfth ribs of the person, and ii) substantially horizontal to the seat surface (11).

7. The seat device of any one of claims 2 to 6, wherein the upper body support surface (21) has a pair of ilium support projections (80) which are fit to the person's ilium projections (91) being projected rearward when the person is seated on the seat member (10), and
the seat surface (11) has a pair of ischium accommodating recesses (40), which accommodates therein a pair of ischium projected portions (161) of the person seated.

8. The seat device of claim 3 or 4, wherein the upper body support member is configured such that at least an upper part hereof is higher than lower ends of the rib support slant ridges (100).

9. The seat device of claim 5, wherein the upper body support member (20) is configured such that at least an upper part of the upper body support member (20) is movable with respect to the seat member (10) in the vertical direction, wherein the upper part is higher than lower ends of the shoulder blade aid ridges (110).

10. The seat device of claim 6, wherein the upper body support member (20) is configured such that at least an upper part of the upper body support member (20) is movable with respect to the seat surface (11) in the vertical direction, wherein the upper part is higher than lower ends of the lower rib horizontal ridges (120).

11. The seat device of claim 2, wherein the upper body support surface (21) has a pair of rib support slant ridges (100) which are slanted at an angle substantially equal to an inclination angle of the ninth or tenth rib of the person, wherein the rib support slant ridges (100) is located on both sides of a center line of the upper body support surface (21) in a width direction thereof and slanted as advancing from the center line; and
the upper body support member (20) is configured such that at least an upper part of the upper body support member (20) is movable with respect to the seat surface (11) in the vertical direction, wherein the upper part is higher than lower ends of the pair of rib support slant ridges (100).

12. The seat device of claim 2, wherein the upper body support surface (21) has a pair of substantially horizontal ridges (110, 120) which are located on both sides of a center line of the upper body support surface (21) in a width direction thereof, and
the upper body support member (20) is configured such that at least an upper part of the upper body support member (20) is movable with respect to the seat surface (11) in the vertical direction, wherein the upper part includes lower ends of the pair of substantially horizontal ridges (110, 120).

13. The seat device of claim 12, wherein the upper body support surface (21) has a pair of rib support slant ridges (100) which are slanted at an angle substantially equal to an inclination angle of the ninth or tenth rib of the person, wherein the rib support slant ridges (100) is located on both sides of a center line of the upper body support surface (21) in a width direction thereof and slanted as advancing from the center line; and
wherein the upper body support surface (21) has pairs of substantially horizontal ridges (110, 120) which are located on both sides of the center line of the upper body support surface (21) in the width direction thereof and located on both upper and lower sides of the pair of rib support slant ridges (100) in the vertical direction.

14. The seat device of any one of claims 8 to 13, wherein the upper body support surface (21) has a pair of ilium support projections (80) which are fit to a pair of ilium projections (91) of the person;
the seat surface (11) has a pair of ischium accommodating recesses (40), which accommodates therein a pair of ischium projected portions (61) of the person; and
the upper body support member (21) has a portion in which the pair of ilium support projections (80) are provided on the upper body support surface (21), wherein the portion of the upper body support member (20) is inseparable from the seat member (10).

## Patentansprüche

1. Sitzvorrichtung zum Erhalten einer Sitzposition einer Person, die ein Sitzteil (10) mit einer Sitzfläche (11) aufweist, auf der eine Person sitzt, wobei die Sitzfläche (11) mit Rippen versehen ist,
**dadurch gekennzeichnet, dass**
die Sitzfläche (11) über ein Paar Schenkelpositions-Referenzrippen (70) verfügt, von denen sich jede in einer Mulde zwischen einem Musculus biceps femoris und einem Musculus semimembranosus von jedem Schenkel der Person befindet.

2. Sitzvorrichtung nach Anspruch 1, die außerdem ein Oberkörperstützelement (20) mit Oberkörperstützfläche (21) aufweist, das den Rücken der Person stützt.

3. Sitzvorrichtung nach Anspruch 2, wobei die Oberkörperstützfläche (21) über ein Paar Rippenstütz-Schrägrippen (100) verfügt, die wie eine Form der Rippen der Person abgeschrägt sind, um die Rippen von unten zu stützen, die sich mit der Ausatmung der Person senken.

4. Sitzvorrichtung nach Anspruch 3, wobei das Paar Rippenstütz-Schrägrippen (100) so geformt ist, dass diese den Rücken einer Person zwischen der neunten und zehnten Rippe der Rippen berühren.

5. Sitzvorrichtung nach einem der Ansprüche 2 bis 4, wobei die Oberkörperstützfläche (21) über ein Paar Schulterblatt-Hilfsrippen (110) verfügt, das i) so angeordnet ist, dass es zu dem Bereich von der fünften bis zur siebten Rippe in einer vertikalen Richtung des Sitzteils (10) passt, ii) größtenteils horizontal zu der Sitzfläche (11) verläuft und iii) so angeordnet ist, dass eine Länge von einer Mittellinie der Oberkörperstützfläche (21) in einer Richtung der Breite nach zu einem mittellinienseitigen Ende von jeder der Hilfsrippen (110) größer gleich einer Länge von einer Wirbelsäulenmittellinie zu einem Wirbelsäulenende der Person ist und kleiner gleich einer Länge von der Wirbelsäulenmittellinie zu einem Schulterblatt der Person ist.

6. Sitzvorrichtung nach Anspruch 5, wobei die Oberkörperstützfläche (21) über ein Paar Horizontalrippen für die unteren Rippen (120) verfügt, das i) so angeordnet ist, dass es zu dem Bereich von der zehnten bis zur zwölften Rippe der Person passt, und ii) größtenteils horizontal zu der Sitzfläche (11) verläuft.

7. Sitzvorrichtung nach einem der Ansprüche 2 bis 6, wobei die Oberkörperstützfläche (21) über ein Paar Hüftknochenstützvorsprünge (80) verfügt, die zu den Hüftknochen der Person (91) passen, die nach hinten herausragen, wenn die Person auf dem Sitzteil (10) sitzt, und
die Sitzfläche (11) über ein Paar Sitzbein-Aufnahmemulden (40) verfügt, das ein Paar hervorstehender Sitzbeinteile (161) der sitzenden Person aufnimmt.

8. Sitzvorrichtung nach Anspruch 3 oder 4, wobei das Oberkörperstützelement so konfiguriert ist, dass zumindest ein oberer Teil davon höher als die unteren Enden der Rippenstütz-Schrägrippen (100) ist.

9. Sitzvorrichtung nach Anspruch 5, wobei das Oberkörperstützelement (20) so konfiguriert ist, dass zumindest ein oberer Teil des Oberkörperstützelements (20) abhängig von dem Sitzteil (10) in vertikaler Richtung beweglich ist, wobei der obere Teil höher als die unteren Enden der Schulterblatt-Hilfsrippen (110) ist.

10. Sitzvorrichtung nach Anspruch 6, wobei das Oberkörperstützelement (20) so konfiguriert ist, dass zumindest ein oberer Teil des Oberkörperstützelements (20) abhängig von der Sitzfläche (11) in vertikaler Richtung beweglich ist, wobei der obere Teil höher als die unteren Enden der Horizontalrippen für die unteren Rippen (120) ist.

11. Sitzvorrichtung nach Anspruch 2, wobei die Oberkörperstützfläche (21) über ein Paar Rippenstütz-Schrägrippen (100) verfügt, die in einem Winkel abgeschrägt sind, der größtenteils mit einem Neigungswinkel der neunten oder zehnten Rippe der Person identisch ist, wobei sich die Rippenstütz-Schrägrippen (100) auf beiden Seiten einer Mittellinie der Oberkörperstützfläche (21) in einer Richtung der Breite nach befinden und ab der Mittellinie abgeschrägt verlaufen; und
das Oberkörperstützelement (20) so konfiguriert ist, dass zumindest ein oberer Teil des Oberkörperstützelements (20) abhängig von der Sitzfläche (11) in vertikaler Richtung beweglich ist, wobei der obere Teil höher als die unteren Enden des Paars Rippenstütz-Schrägrippen (100) ist.

12. Sitzvorrichtung nach Anspruch 2, wobei die Oberkörperstützfläche (21) über ein Paar größtenteils horizontaler Rippen (110, 120) verfügt, die sich auf beiden Seiten einer Mittellinie der Oberkörperstützfläche (21) in einer Richtung der Breite nach befinden, und
das Oberkörperstützelement (20) so konfiguriert ist, dass zumindest ein oberer Teil des Oberkörperstützelements (20) abhängig von der Sitzfläche (11) in vertikaler Richtung beweglich ist, wobei der obere Teil untere Enden von dem Paar größtenteils horizontaler Rippen (110, 120) beinhaltet.

13. Sitzvorrichtung nach Anspruch 12, wobei die Oberkörperstützfläche (21) über ein Paar Rippenstütz-Schrägrippen (100) verfügt, die in einem Winkel abgeschrägt sind, der größtenteils mit einem Neigungswinkel der neunten oder zehnten Rippe der Person identisch ist, wobei sich die Rippenstütz-Schrägrippen (100) auf beiden Seiten einer Mittellinie der Oberkörperstützfläche (21) in einer Richtung der Breite nach befinden und ab der Mittellinie abgeschrägt verlaufen; und
wobei die Oberkörperstützfläche (21) über Paare größtenteils horizontaler Rippen (110, 120) verfügt, die sich auf beiden Seiten der Mittellinie der Oberkörperstützfläche (21) in einer Richtung der Breite nach befinden und sich auf sowohl der oberen als auch der unteren Seite des Paars Rippenstütz-Schrägrippen (100) in vertikaler Richtung befinden.

14. Sitzvorrichtung nach einem der Ansprüche 8 bis 13, wobei die Oberkörperstützfläche (21) über ein Paar Hüftknochenstützvorsprünge (80) verfügt, die zu den Hüftknochen der Person (91) passen;
die Sitzfläche (11) über ein Paar Sitzbein-Aufnahmemulden (40) verfügt, das ein Paar hervorstehender Sitzbeinteile (161) der sitzenden Person aufnimmt; und
das Oberkörperstützelement (20) über einen Teil verfügt, in dem das Paar Hüftknochenstützvorsprünge (80) auf der Oberkörperstützfläche (21) angebracht ist, wobei der Teil des Oberkörperstützelements (20) nicht von dem Sitzteil (10) getrennt werden kann.

## Revendications

1. Dispositif de siège destiné à garder une position assise d'une personne, comprenant un élément de siège (10) ayant une surface de siège (11) sur laquelle une personne est assise, moyennant quoi la surface de siège (11) est munie de stries,
**caractérisé en ce que**
la surface de siège (11) comporte une paire de stries de référence de position de cuisse (70) dont chacune est ajustée à un évidement entre un muscle biceps crural et un muscle demi-membraneux de chaque cuisse de la personne.

2. Dispositif de siège de la revendication 1, comprenant en outre un élément de support de haut de corps (20) ayant une surface de support de haut de corps (21) qui supporte le dos de la personne.

3. Dispositif de siège de la revendication 2, dans lequel la surface de support de haut de corps (21) comporte une paire de stries inclinées de support de côtes (100) qui sont inclinées selon la forme des côtes de la personne pour supporter les côtes depuis le dessous en descendant avec l'expiration de la personne.

4. Dispositif de siège de la revendication 3, dans lequel la paire de stries inclinées de support de côtes (100) sont formées de façon à toucher le dos de la personne entre une neuvième côte et une dixième côte des côtes.

5. Dispositif de siège de l'une quelconque des revendications 2 à 4, dans lequel la surface de support de haut de corps (21) comporte une paire de stries d'aide d'omoplate (110) qui est i) située de façon à s'ajuster à une série de la cinquième à la septième côte dans une direction verticale de l'élément de siège (10), ii) essentiellement horizontale à la surface de siège (11), et iii) située de sorte qu'une longueur depuis une ligne centrale de la surface de support de haut de corps (21) dans sa direction de largeur jusqu'à une extrémité côté ligne centrale de chacune des stries d'aide (110) soit supérieure ou égale à une longueur depuis un axe de colonne vertébrale jusqu'à une extrémité de colonne vertébrale de la personne et inférieure ou égale à une longueur depuis l'axe de colonne vertébrale jusqu'à une omoplate de la personne.

6. Dispositif de siège de la revendication 5, dans lequel la surface de support de haut de corps (21) comporte une paire de stries horizontales de côtes inférieures (120) qui est i) située de façon à être ajustée à une série de la dixième à la douzième côte de la personne, et ii) essentiellement horizontale à la surface de siège (11).

7. Dispositif de siège de l'une quelconque des revendications 2 à 6, dans lequel la surface de support de haut de corps (21) comporte une paire de projections (80) de support d'ilion qui sont ajustées aux projections d'ilion (91) de la personne étant projetées vers l'arrière lorsque la personne est assise sur l'élément de siège (10),
et
la surface de siège (11) comporte une paire d'évidements de réception d'ischion (40), qui reçoivent dedans une paire de parties projetées d'ischion (161) de la personne assise.

8. Dispositif de siège de la revendication 3 ou 4, dans lequel l'élément de support de haut de corps est configuré de sorte qu'au moins sa partie supérieure soit plus élevée que les extrémités inférieures des stries inclinées de support de côtes (100).

9. Dispositif de siège de la revendication 5, dans lequel l'élément de support de haut de corps (20) est configuré de sorte qu'au moins une partie supérieure de l'élément de support de haut de corps (20) soit mobile par rapport à l'élément de siège (10) dans la direction verticale, où la partie supérieure est plus élevée que les extrémités inférieures des stries d'aide d'omoplate (110).

10. Dispositif de siège de la revendication 6, dans lequel l'élément de support de haut de corps (20) est configuré de sorte qu'au moins une partie supérieure de l'élément de support de haut de corps (20) soit mobile par rapport à la surface de siège (11) dans la direction verticale, où la partie supérieure est plus élevée que les extrémités inférieures des stries horizontales de côtes inférieures (120).

11. Dispositif de siège de la revendication 2, dans lequel la surface de support de haut de corps (21) comporte une paire de stries inclinées de support de côtes (100) qui sont inclinées à un angle essentiellement égal à un angle d'inclinaison de la neuvième ou dixième côte de la personne, où les stries inclinées de support de côtes (100) sont situées sur les deux côtés d'une ligne centrale de la surface de support de haut de corps (21) dans sa direction de largeur et inclinées en avançant depuis la ligne centrale ; et
l'élément de support de haut de corps (20) est configuré de sorte qu'au moins une partie supérieure de l'élément de support de haut de corps (20) soit mobile par rapport à la surface de siège (11) dans la direction verticale, où la partie supérieure est plus élevée que les extrémités inférieures de la paire de stries inclinées de support de côtes (100).

12. Dispositif de siège de la revendication 2, dans lequel la surface de support de haut de corps (21) comporte une paire de stries essentiellement horizontales (110, 120) qui sont situées sur les deux côtés d'une ligne centrale de la surface de support de haut de corps (21) dans sa direction de largeur, et
l'élément de support de haut de corps (20) est configuré de sorte qu'au moins une partie supérieure de l'élément de support de haut de corps (20) soit mobile par rapport à la surface de siège (11) dans la direction verticale, où la partie supérieure comporte des extrémités inférieures de la paire de stries essentiellement horizontales (110, 120).

13. Dispositif de siège de la revendication 12, dans lequel la surface de support de haut de corps (21) comporte une paire de stries inclinées de support de côtes (100) qui sont inclinées à un angle essentiellement égal à un angle d'inclinaison de la neuvième ou dixième côte de la personne, où les stries inclinées de support de côtes (100) sont situées sur les deux côtés d'une ligne centrale de la surface de support de haut de corps (21) dans sa direction de largeur et inclinées en avançant depuis la ligne centrale ; et
dans lequel la surface de support de haut de corps (21) comporte des paires de stries essentiellement horizontales (110, 120) qui sont situées sur les deux côtés de la ligne centrale de la surface de support de haut de corps (21) dans sa direction de largeur et situées sur les côtés supérieur et inférieur de la paire de stries inclinées de support de côtes (100) dans la direction verticale.

14. Dispositif de siège de l'une quelconque des revendications 8 à 13, dans lequel la surface de support de haut de corps (21) comporte une paire de projections (80) de support d'ilion qui sont ajustées à une paire de projections d'ilion (91) de la personne ;
la surface de siège (11) comporte une paire d'évidements de réception d'ischion (40), qui reçoivent dedans une paire de parties projetées d'ischion (61) de la personne ; et
l'élément de support de haut de corps (20) a une partie dans laquelle la paire de projections de support d'ilion (80) sont prévues sur la surface de support de haut de corps (21), où la partie de l'élément de support de haut de corps (20) est inséparable de l'élément de siège (10).
